# EUROPÄISCHE PATENTSCHRIFT

(11) **EP 3 441 587 B1**
(45) Veröffentlichungstag und Bekanntmachung des Hinweises auf die Patenterteilung: **10.03.2021**
(21) Anmeldenummer: 18187643.4
(22) Anmeldetag: 07.08.2018
(51) Int. Cl.: F01N 3/20, F01N 3/32, F01N 5/04, F01N 9/00, F02B 39/10, F02B 37/16, F02B 37/04, F02D 41/00, F02D 41/02

(54) **VERFAHREN ZUM BETREIBEN EINES VERBRENNUNGSMOTORS**
METHOD FOR OPERATING A COMBUSTION ENGINE
PROCÉDÉ DE FONCTIONNEMENT D'UN MOTEUR À COMBUSTION INTERNE

(30) Priorität: 09.08.2017 DE 102017118129
(43) Veröffentlichungstag der Anmeldung: 13.02.2019
(73) Patentinhaber: VOLKSWAGEN AKTIENGESELLSCHAFT, 38440 Wolfsburg (DE)
(72) Erfinder: KOEHLER, Ingo, 38104 Braunschweig (DE)
(74) Vertreter: Gulde & Partner

(56) Entgegenhaltungen:
- WO-A1-2005/045208
- WO-A1-2013/160530
- DE-A1-102014 223 491

## Beschreibung

Die Erfindung betrifft ein Verfahren zum Betreiben eines Verbrennungsmotors sowie einen Verbrennungsmotor gemäß dem Oberbegriff der unabhängigen Patentansprüche.

Die aktuelle und eine zukünftig immer schärfer werdende Abgasgesetzgebung stellen hohe Anforderungen an die motorischen Rohemissionen und die Abgasnachbehandlung von Verbrennungsmotoren. Dabei stellen die Forderungen nach einem weiter sinkenden Verbrauch und die weitere Verschärfung der Abgasnormen hinsichtlich der zulässigen Stickoxid-Emissionen eine Herausforderung für die Motorenentwickler dar. Bei Ottomotoren erfolgt die Abgasreinigung in bekannter Weise über einen Drei-Wege-Katalysator, sowie dem Drei-Wege-Katalysator vor- und nachgeschaltete weitere Katalysatoren. Bei Dieselmotoren finden aktuell Abgasnachbehandlungssysteme Verwendung, welche einen Oxidationskatalysator oder einen NOx-Speicherkatalysator, einen Katalysator zur selektiven katalytischen Reduktion von Stickoxiden (SCR-Katalysator) sowie einen Partikelfilter zur Abscheidung von Rußpartikeln und gegebenenfalls weitere Katalysatoren aufweisen. Als Reduktionsmittel wird dabei bevorzugt Ammoniak verwendet. Weil der Umgang mit reinem Ammoniak aufwendig ist, wird bei Fahrzeugen üblicherweise eine synthetische, wässrige Harnstofflösung verwendet, die in einer dem SCR-Katalysator vorgeschalteten Mischeinrichtung mit dem heißen Abgasstrom vermischt wird. Durch diese Vermischung wird die wässrige Harnstofflösung erhitzt, wobei die wässrige Harnstofflösung Ammoniak im Abgaskanal freisetzt. Eine handelsübliche, wässrige Harnstofflösung setzt sich im Allgemeinen aus 32,5 % Harnstoff und 67,5 % Wasser zusammen.

Zur Erfüllung der sogenannten "Real-Drive-Emissions" (RDE) ist bei PKW-Dieselmotoren eine nahezu kennfeldweite Reduktion von Stickoxiden erforderlich. Dazu müssen die Rohemissionen stationär und instationär gering gehalten werden. Zusätzlich ist aber auch eine ausreichend hohe Konvertierungsrate von Stickoxiden in der Abgasnachbehandlung erforderlich. Zur Optimierung des instationären Verhaltens des Verbrennungsmotors sind elektrisch angetriebene Zusatzverdichter bekannt, mit denen parallel oder sequenziell zu dem Verdichter des Abgasturboladers Frischluft verdichtet wird. Die Reduktion von Stickoxiden erfolgt durch ein SCR-System mit einem SCR-Katalysator und einem dazugehörigen Dosiersystem zur Eindosierung der wässrigen Harnstofflösung. Die Reduktion von Stickoxiden durch den SCR-Katalysator ist aber nur in einem begrenzten Temperaturfenster möglich. Bei hohen Abgastemperaturen von mehr als 600°C können Stichoxide nicht mehr effizient durch den SCR-Katalysator konvertiert werden, da das aus der wässrigen Harnstofflösung gebildete Ammoniak thermisch zersetzt wird. Bei schweren und/oder leistungsstarken Fahrzeugen kann diese Abgastemperatur von 600°C überschritten werden, sodass zusätzliche Maßnahmen in der Abgasnachbehandlung notwendig sind.

Aus der DE 10 2012 008 107 A1 ist ein Verfahren zum Betreiben eines mittels eines Abgasturboladers aufgeladenen Verbrennungsmotors bekannt, wobei der Abgasanlage stromabwärts eines Auslasses des Verbrennungsmotors und stromaufwärts einer Turbine des Abgasturboladers ein verdichtetes Zusatzgas zugeführt wird, um das Ansprechverhalten des Abgasturboladers zu verbessern und ein sogenanntes "Turboloch" zu verkleinern.

Aus der EP 2 339 154 A1 ist ein Verfahren zum Betreiben eines Verbrennungsmotors mit einem Abgasturbolader bekannt, wobei durch einen elektrischen Zusatzverdichter stromabwärts eines Auslasses des Verbrennungsmotors und stromaufwärts einer Turbine des Abgasturboladers zusätzlich, verdichtete Luft in den Abgaskanal eingebracht wird, um das Ansprechverhalten eines großvolumigen Abgasturboladers zu verbessern, wenn der Verbrennungsmotor mit geringer Drehzahl und einem damit verbundenen geringen Abgasmassenstrom betrieben wird.

Aus der DE 10 2014 223 491 A1 ist ein Verfahren zur Abgasnachbehandlung eines Verbrennungsmotors bekannt, bei welchem in der Abgasanlage eines Verbrennungsmotors ein NOx-Speicherkatalysator und ein dem NOx-Speicherkatalysator nachgeschalteter SCR-Katalysator angeordnet sind. Dabei wird die Hochdruck-Abgasrückführung bei einem Stillstand des Verbrennungsmotors genutzt, um Frischluft aus dem Ansaugtrakt entgegen der Rückführungsrichtung in die Abgasanlage einzuleiten, um eine Regeneration des NOx-Speicherkatalysators durchzuführen.

Die WO 2005 / 045 208 A1 offenbart ein Verfahren zum Betreiben einer Brennkraftmaschine, bei welchem die im Abgas der Brennkraftmaschine enthaltenen Schadstoffe von einer Reinigungseinrichtung reduziert werden. Diese Reinigungsvorrichtung wird zumindest zeitweise durch einen Oxidationsprozess regeneriert. Während der Regeneration der Reinigungsvorrichtung wird Frischluft stromaufwärts der Reinigungsvorrichtung in die Abgasanlage eingeleitet, um den zur Regeneration der Reinigungsvorrichtung notwendigen Sauerstoff bereitzustellen.

Aus der WO 2013 / 160 530 A1 ist ein Verfahren zum Betreiben eines Verbrennungsmotors bekannt, bei welchem die Temperatur eines SCR-Katalysators in der Abgasanlage des Verbrennungsmotors geregelt wird, welcher stromabwärts einer ersten Turbine und stromaufwärts einer zweiten Turbine eines mehrstufigen Abgasturboladers angeordnet ist.

Der Erfindung liegt nun die Aufgabe zugrunde, die Stickoxid-Emissionen eines Verbrennungsmotors in allen Betriebsbereichen des Verbrennungsmotors zu verringern und die aus dem Stand der Technik bekannten Nachteile zu überwinden.

Erfindungsgemäß wird die Aufgabe durch ein Verfahren zum Betreiben eines Verbrennungsmotors, dessen Einlass mit einem Ansaugtrakt und dessen Auslass mit einer Abgasanlage verbunden ist, gelöst. Dabei ist der Verbrennungsmotor mittels eines Abgasturboladers mit einem im Ansaugtrakt angeordneten Verdichter, welcher durch eine in der Abgasanlage angeordnete Turbine angetrieben wird, aufgeladen. Ferner ist ein zweiter Verdichter vorgesehen, welcher über eine erste Leitung mit dem Ansaugtrakt und über eine zweite Leitung mit der Abgasanlage verbunden ist. In einem ersten Betriebszustand des Verbrennungsmotors wird der zweite Verdichter dazu genutzt, um zusätzlich zum Verdichter des Abgasturboladers die dem Verbrennungsmotor zugeführte Frischluft zu verdichten. In einem zweiten Betriebszustand des Verbrennungsmotors wird durch den zweiten Verdichter Frischluft in die Abgasanlage eingebracht, um die Abgastemperatur vor dem Eintritt in einen SCR-Katalysator abzusenken. Dadurch kann der Zusatzverdichter sowohl genutzt werden, um die Leistung und/oder das Drehmoment des Verbrennungsmotors insbesondere bei niedrigen Drehzahlen zu steigern, als auch um eine effiziente Abgasnachbehandlung des Abgases des Verbrennungsmotors durch den SCR-Katalysator zu ermöglichen und das thermische Betriebsfenster, in dem eine effiziente Konvertierung von Stickoxiden möglich ist, nicht nach oben zu verlassen.

Durch die in den abhängigen Ansprüchen angegebenen Maßnahmen sind vorteilhafte Verbesserungen und Weiterentwicklungen des im unabhängigen Anspruch angegebenen Verfahrens zum Betreiben eines Verbrennungsmotors möglich.

In bevorzugter Ausgestaltung der Erfindung ist vorgesehen, dass in dem zweiten Betriebszustand Frischluft stromabwärts der Turbine des Abgasturboladers und stromaufwärts des SCR-Katalysators in die Abgasanlage eingeblasen wird. Durch ein Einbringen von Frischluft unmittelbar stromabwärts der Turbine kann eine Ejektorströmung ausgebildet werden, welche den Druck stromabwärts der Turbine absenkt und somit das Druckverhältnis über die Turbine vergrößert. Dadurch kann der Wirkungsgrad der Turbine gesteigert werden, wodurch der Verbrauch des Verbrennungsmotors gesenkt oder die Leistung des Verbrennungsmotors erhöht werden kann.

In einer bevorzugten Ausführungsform des Verfahrens ist mit Vorteil vorgesehen, dass eine Abgastemperatur des Abgases des Verbrennungsmotors ermittelt wird und nur dann Frischluft in die Abgasanlage eingeblasen wird, wenn die Abgastemperatur eine Schwellentemperatur übersteigt. Dadurch kann der zweite Verdichter abgeschaltet werden, wenn der Verbrennungsmotor in einem Betriebspunkt betrieben wird, bei dem der erste Verdichter eine hinreichende Luftmenge verdichtet und eine effiziente Abgasnachbehandlung durch den SCR-Katalysator ohne zusätzliche Maßnahme möglich ist.

Dabei liegt die Schwellentemperatur vorzugsweise oberhalb von 500°C, insbesondere oberhalb von 600°C. Steigt die Abgastemperatur über die Schwellentemperatur, dann kann es zu einer thermischen Zersetzung des aus der wässrigen Harnstofflösung gebildeten Ammoniaks kommen. Daher ist es vorteilhaft und im Sinne geringer Stickoxid-Emissionen zielführend, wenn oberhalb dieser Schwellentemperatur die vom zweiten Verdichter verdichtete Frischluft in den Abgaskanal des Verbrennungsmotors gefördert wird.

In weiterer bevorzugter Ausgestaltung der Erfindung ist vorgesehen, dass ein Lastzustand des Verbrennungsmotors ermittelt wird und nur dann Frischluft in den Abgaskanal eingeblasen wird, wenn die Last des Verbrennungsmotors einen Schwellenwert übersteigt. Dabei kann der Schwellenwert vorzugsweise mindesten 70 %, bevorzugt mindestens 80 % der maximalen Leistung des Verbrennungsmotors entsprechen. Alternativ oder zusätzlich zu einer Abgastemperatur kann auch ein Lastzustand des Verbrennungsmotors ermittelt werden, wobei gerade bei hoher Last und vergleichsweise geringer Drehzahl mit hohen Abgastemperaturen zu rechnen ist.

Erfindungsgemäß ist ein Verbrennungsmotor für ein Kraftfahrzeug vorgesehen, dessen Einlass mit einem Ansaugtrakt und dessen Auslass mit einer Abgasanlage verbunden ist. Dabei ist der Verbrennungsmotor mittels eines Abgasturboladers mit einem im Ansaugtrakt angeordneten Verdichter und einer in der Abgasanlage angeordneten Turbine aufgeladen. Ferner ist ein zweiter Verdichter vorgesehen, welcher über eine erste Leitung mit dem Ansaugtrakt und über eine zweite Leitung mit der Abgasanlage verbunden ist. Der Verbrennungsmotor weist ein Steuergerät auf, welches dazu eingerichtet ist, ein erfindungsgemäßes Verfahren zum Betreiben des Verbrennungsmotors auszuführen, wenn ein maschinenlesbarer Programmcode durch das Steuergerät ausgeführt wird. Bei einem erfindungsgemäßen Verbrennungsmotor lassen sich durch das Einblasen von Frischluft in den Abgaskanal die Abgastemperaturen im Real-Drive-Emission-Zyklus absenken, da der SCR-Katalysator stets in einem Temperaturfenster gehalten wird, bei welchem eine effiziente Konvertierung von Stickoxiden möglich ist.

In einer vorteilhaften Ausführungsform der Erfindung ist vorgesehen, dass an dem zweiten Verdichter oder an einer Verzweigungsstelle, an der sich eine Leitung von dem zweiten Verdichter in die erste Leitung und die zweite Leitung aufteilt, ein Ventil vorgesehen ist, mit welchem ein Frischluftstrom zwischen der ersten Leitung und der zweiten Leitung umschaltbar oder aufteilbar ist. Durch ein entsprechendes, vorzugsweise elektrisch ansteuerbares Ventil kann auf einfache und kostengünstige Art und Weise der Luftstrom des zweiten Verdichters auf den Ansaugtrakt oder den Abgaskanal umgeschaltet werden. Zudem ist eine Aufteilung des durch den zweiten Verdichter gelieferten Frischluftstroms möglich.

In einer bevorzugten Ausführungsform ist vorgesehen, dass der zweite Verdichter als elektrisch angetriebener Verdichter ausgebildet ist. Durch einen elektrisch angetriebenen Verdichter kann die Frischluft im Wesentlichen unabhängig von der Betriebssituation des Verbrennungsmotors verdichtet werden. Dabei kann der elektrisch angetriebene Verdichter insbesondere bei geringen Drehzahlen, bei denen die Turbine des Abgasturboladers noch keine hinreichende Verdichtungswirkung hat, unterstützend wirken, um das Drehmoment bei geringen Drehzahlen anzuheben und somit das sogenannte "Turboloch" zu verkleinern.

In einer vorteilhaften Ausführungsform der Erfindung ist vorgesehen, dass der zweite Verdichter in einer Bypassleitung angeordnet ist, welche parallel zu einer Ansaugleitung des Ansaugtraktes angeordnet ist. Dadurch ist eine Entkopplung des zweiten Verdichters aus dem Ansaugstrom möglich, wenn der zweite Verdichter nicht gebraucht wird. Dadurch kann der Strömungswiderstand in der Ansaugleitung gering gehalten werden und der zweite Verdichter wird nur dann durchströmt, wenn der zweite Verdichter aktiv angesteuert wird.

Besonders bevorzugt ist dabei, wenn in dem Abschnitt der Ansaugleitung, welcher parallel zu der Bypassleitung verläuft, ein Rückschlagventil vorgesehen ist. Durch ein Rückschlagventil in dem Hauptkanal der Ansaugleitung kann verhindert werden, dass die durch den zweiten Verdichter verdichtete Frischluft wieder in Richtung der Ansaugöffnung ausgeblasen wird. Zudem können Pumpschwingungen durch instationäre Strömungsführungen vermieden werden, wodurch der zweite Verdichter möglicherweise beschädigt werden könnte.

In einer weiteren Ausführungsform der Erfindung ist vorgesehen, dass in der Abgasanlage stromabwärts der Turbine des Abgasturboladers und stromaufwärts eines SCR-Katalysators ein Oxidationskatalysator oder ein NOx-Speicherkatalysator angeordnet ist. Besonders bevorzugt ist dabei, wenn die vom zweiten Verdichter in die Abgasanlage geförderte Frischluft stromabwärts der Turbine und stromaufwärts des Oxidationskatalysators oder des NOx-Speicherkatalysators eingeleitet wird. Durch ein Einbringen von Frischluft unmittelbar stromabwärts der Turbine und stromaufwärts des Oxidationskatalysators können die Druckverhältnisse über die Turbine verbessert werden und somit die Leistung der Turbine gesteigert werden. Ferner kann durch den zweiten Verdichter und die Frischluft zusätzlicher Sauerstoff in den Abgaskanal eingebracht werden, wodurch die Wirkung des Oxidationskatalysators verbessert werden kann.

Alternativ ist mit Vorteil vorgesehen, dass die Frischluft stromabwärts des Oxidationskatalysators oder des NOx-Speicherkatalysators und stromaufwärts des SCR-Katalysators in die Abgasanlage eingeleitet wird. Durch ein Einbringen der Frischluft stromabwärts des Oxidationskatalysators oder NOx-Speicherkatalysators kann ebenfalls auf vorteilhafte Weise die Abgastemperatur vor Eintritt in den SCR-Katalysator abgesenkt werden. Zudem ist der Abgasgegendruck stromabwärts des Oxidationskatalysators oder des NOx-Speicherkatalysators geringfügig niedriger als stromaufwärts desselben, sodass das Druckverhältnis über den zweiten Verdichter gesenkt werden kann.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Gleiche Bauteile oder Bauteile mit gleicher Funktion sind dabei in den unterschiedlichen Zeichnungen mit gleichen Bezugszeichen gekennzeichnet. Es zeigen:
- Figur 1: ein erstes Ausführungsbeispiel eines erfindungsgemäßen Verbrennungsmotors, bei dem zur Absenkung der Abgastemperatur vor Eintritt in den SCR-Katalysator Frischluft stromabwärts einer Turbine eines Abgasturboladers in den Abgaskanal eingeblasen werden kann; und
- Figur 2: ein alternatives Ausführungsbeispiel eines erfindungsgemäßen Verbrennungsmotors für ein Kraftfahrzeug, bei dem über einen Zusatzverdichter Frischluft unmittelbar vor Eintritt in den SCR-Katalysators in den Abgaskanal eingebracht wird.

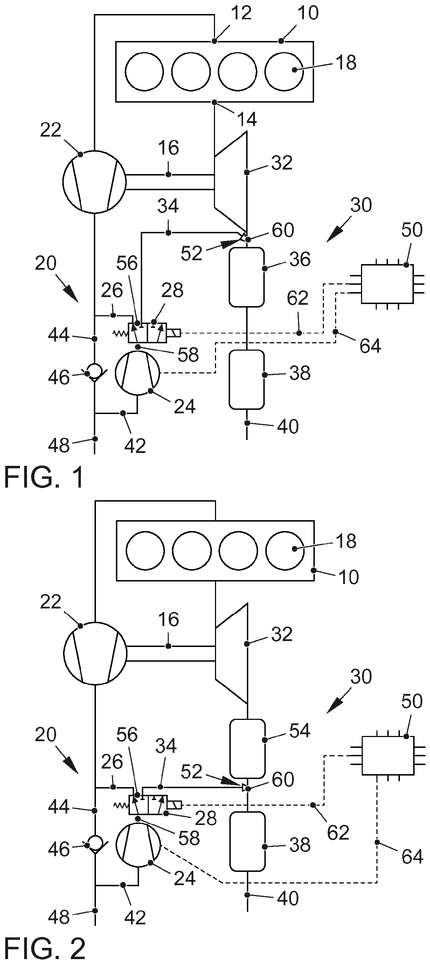

Figur 1 zeigt einen Verbrennungsmotor 10 mit einer Mehrzahl von Brennräumen 18. Der Verbrennungsmotor 10 weist einen Einlass 12 auf, welcher mit einem Ansaugtrakt 20 verbunden ist. Der Ansaugtrakt 20 umfasst eine Ansaugleitung 48, in welcher ein Verdichter 22 eines Abgasturboladers 16 angeordnet ist. Die Ansaugleitung 48 weist eine Hauptleitung 44 und eine parallel zu der Hauptleitung 44 verlaufende Bypassleitung 42 auf, wobei in der Bypassleitung 42 ein zweiter Verdichter 24 angeordnet ist, welcher vorzugsweise als elektrisch angetriebenen Zusatzverdichter ausgebildet ist. In der Hauptleitung 44 ist in dem von der Bypassleitung 42 überbrückten Abschnitt ein Rückschlagventil 46 angeordnet. Der Verbrennungsmotor 10 weist ferner einen Auslass 14 auf, welcher mit einer Abgasanlage 30 des Verbrennungsmotors 10 verbunden ist. In der Abgasanlage 30 sind in Strömungsrichtung eines Abgases des Verbrennungsmotors 10 durch einen Abgaskanal 40 der Abgasanlage 30 eine Turbine 32 des Abgasturboladers 16, stromabwärts der Turbine 32 ein Oxidationskatalysator 36 und stromabwärts des Oxidationskatalysators 36 ein SCR-Katalysator 38 angeordnet.

Der zweite Verdichter 24 ist über eine erste Leitung 26 mit der Ansaugleitung 48 stromaufwärts des ersten Verdichters 22 und über eine zweite Leitung 34 mit dem Abgaskanal 40 stromabwärts der Turbine 32 des Abgasturboladers 16 und stromaufwärts des Oxidationskatalysators 36 verbunden. An einer Verzweigungsstelle 56, an der sich eine Leitung 58 von dem zweiten Verdichter 24 in die erste Leitung 26 und die zweite Leitung 34 verzweigt, ist ein schaltbares Ventil 28 vorgesehen, mit welchem der durch den zweiten Verdichter 24 verdichtete Luftstrom auf die erste Leitung 26 und die zweite Leitung 34 verteilen lässt oder zwischen der ersten Leitung 26 und der zweiten Leitung 34 umschaltbar ist. Die zweite Leitung 34 mündet an einer Einmündung 60 stromabwärts der Turbine 32 und stromaufwärts des Oxidationskatalysators 36 in den Abgaskanal 40, wobei an der Einmündung 60 vorzugsweise eine Düse 52 zur Beschleunigung des Frischluftstroms vorgesehen ist, um eine entsprechende Ejektorwirkung zu erzielen und somit den Wirkungsgrad der Turbine 32 und somit des Abgasturboladers 16 zu verbessern. Alternativ zu einem Oxidationskatalysator 36 kann an gleicher Stelle auch ein NOx-Speicherkatalysator 54 angeordnet sein. Der Verbrennungsmotor 10 weist ferner ein Steuergerät 50 auf, welches über entsprechende Signalleitungen 62, 64 mit dem zweiten Verdichter 24 und dem schaltbaren Ventil 28 verbunden ist, um diese elektrisch ansteuern zu können.

Im Normalbetrieb des Verbrennungsmotors 10 wird der zweite Verdichter 24 dazu genutzt, den Verdichter 22 des Abgasturboladers 16 bei der Bereitstellung von verdichteter Frischluft zu unterstützen und insbesondere bei niedrigen Drehzahlen für eine verbesserte Füllung der Brennräume 18 des Verbrennungsmotors 10 zu sorgen, um das nutzbare Drehmoment bei niedrigen Drehzahlen zu verbessern. Dazu befindet sich das schaltbare Ventil 28 in einer ersten Schaltstellung, in der die Leitung 58 mit der ersten Leitung 26 verbunden ist und durch die dem zweiten Verdichter 24 verdichtete Frischluft der Absaugleitung 48 stromaufwärts des ersten Verdichters 22 zuführt wird. Durch das Rückschlagventil 46 in der Hauptleitung 44 wird ein unerwünschtes Rückströmen der verdichteten Frischluft vermieden. Dadurch kann ein gleichmäßiges, hohes Drehmoment über den gesamten nutzbaren Drehzahlbereich des Verbrennungsmotors 10 sichergestellt werden.

In einem zweiten Betriebszustand des Verbrennungsmotors 10, welcher im Folgenden als Hochlastbetrieb bezeichnet wird, wird das schaltbare Ventil 28 in eine zweite Schaltstellung gebracht, sodass die Leitung 58 mit der zweiten Leitung 34 verbunden ist. Dadurch kann die von dem zweiten Verdichter 24 geförderte Frischluft in den Abgaskanal 40 stromaufwärts des SCR-Katalysators 38 eingeleitet werden, um die Abgastemperatur T_{EG} vor dem SCR-Katalysator 38 im Hochlastbetrieb zu senken. Dadurch kann die Abgastemperatur T_{EG} in allen Lastpunkten soweit abgesenkt werden, dass eine thermische Zersetzung des aus der wässrigen Harnstofflösung gebildeten Ammoniaks unterbunden wird und die bei der Verbrennung auftretenden Stickoxide NOx effizient durch ein entsprechendes Dosiersystem und den SCR-Katalysator 38 in unschädliche Abgaskomponenten konvertiert werden können. Somit können die Real-Drive-Emissions verringert werden. Insbesondere kann der Ausstoß von Stickoxiden verringert werden, da diese auch in Lastpunkten konvertiert werden können, bei denen bislang eine Konvertierung nicht oder nur eingeschränkt möglich war, da die Abgastemperatur T_{EG} für ein Verfahren zur selektiven katalytischen Reduktion der Stickoxide zu hoch war. Zudem kann als positiver Effekt das Druckverhältnis an der Turbine 32 des Abgasturboladers 16 durch die Einblasung der Frischluft als Ejektorströmung beeinflusst werden, sodass der Wirkungsgrad der Turbine 32 gesteigert werden kann und somit die Leistung und/oder der Wirkungsgrad des Verbrennungsmotors 10 verbessert werden kann.

In Figur 2 ist ein weiteres Ausführungsbeispiel eines erfindungsgemäßen Verbrennungsmotors 10 dargestellt. Bei im Wesentlichen gleichem Aufbau wie zu Figur 1 ausgeführt, mündet die zweite Leitung 34 in diesem Ausführungsbeispiel stromabwärts des Oxidationskatalysators 36 und stromaufwärts des SCR-Katalysators 38 in den Abgaskanal 40. Dabei wird auf den positiven Effekt der Ejektorströmung auf die Turbine 32 des Abgasturboladers 16 verzichtet, jedoch wird die Frischluft unmittelbar vor dem SCR-Katalysator 38 eingebracht, sodass die Kühlwirkung bei gleicher Luftmenge verbessert werden kann, da der Frischluftstrom nicht durch einen heißen Oxidationskatalysator 36 aufgeheizt wird. Durch den etwas geringeren Abgasgegendruck stromabwärts des Oxidationskatalysators 36 kann des Druckverhältnis über den zweiten Verdichter 24 gesenkt werden, sodass bei gleicher Luftmenge weniger Leistung benötigt wird und zudem die Frischluft durch den zweiten Verdichter 24 weniger stark erwärmt wird. Durch die Frischluft wird auch in diesem Ausführungsbeispiel die Abgastemperatur T_{EG} vor Eintritt in den SCR-Katalysator 38 abgesenkt, sodass der Betriebsbereich, in dem eine effiziente Konvertierung von Stickoxiden NOx möglich ist, erweitert wird. Insbesondere wird verhindert, dass die Abgastemperatur T_{EG} eine Schwellentemperatur T_{S} übersteigt, ab welcher ein SCR-Verfahren durch den SCR-Katalysator 38 nur noch eingeschränkt oder gar nicht mehr möglich ist.

Zusammenfassend lässt sich festhalten, dass durch ein erfindungsgemäßes Verfahren die Stickoxid-Emissionen NOx eines Verbrennungsmotors 10 in allen Betriebsbereichen des Verbrennungsmotors 10 auf vorteilhafte Weise verringert werden können.

### Bezugszeichenliste

- 10: Verbrennungsmotor
- 12: Einlass
- 14: Auslass
- 16: Abgasturbolader
- 18: Brennraum

- 20: Ansaugtrakt
- 22: Verdichter
- 24: zweiter Verdichter
- 26: erste Leitung
- 28: Schaltventil

- 30: Abgasanlage
- 32: Turbine
- 34: zweite Leitung
- 36: Oxidationskatalysator
- 38: SCR-Katalysator

- 40: Abgaskanal
- 42: Bypassleitung
- 44: Hauptleitung
- 46: Rückschlagventil
- 48: Ansaugleitung

- 50: Steuergerät
- 52: Düse
- 54: NOx-Speicherkatalysator
- 56: Verzweigungsstelle
- 58: Leitung
- 60: Einmündung
- 62: Signalleitung
- 64: Signalleitung

- T: Temperatur
- T_{EG}: Abgastemperatur
- T_{S}: Schwellentemperatur

## Patentansprüche

1. Verfahren zum Betreiben eines Verbrennungsmotors (10), dessen Einlass (12) mit einem Ansaugtrakt (20) und dessen Auslass (14) mit einer Abgasanlage (30) verbunden ist, wobei der Verbrennungsmotor (10) mittels eines Abgasturboladers (16) mit einem im Ansaugtrakt (20) angeordneten Verdichter (22), welcher durch eine in der Abgasanlage (30) angeordnete Turbine (32) angetrieben wird, aufgeladen ist, und wobei ein zweiter Verdichter (24) vorgesehen ist, welcher über eine erste Leitung (26) mit dem Ansaugtrakt (20) und über eine zweite Leitung (34) mit der Abgasanlage (30) verbunden ist, **dadurch gekennzeichnet, dass** in einem ersten Betriebszustand des Verbrennungsmotors (10) der zweite Verdichter (24) genutzt wird, um zusätzlich zum Verdichter (22) des Abgasturboladers (16) die dem Verbrennungsmotor (10) zugeführte Frischluft zu verdichten, und der zweite Verdichter (24) in einem zweiten Betriebszustand Frischluft in die Abgasanlage (30) einbringt, um die Abgastemperatur (T_{EG}) eines Abgasstroms des Verbrennungsmotors (10) vor dem Eintritt in einen SCR-Katalysator (38) abzusenken.

2. Verfahren nach Anspruch 1, **dadurch gekennzeichnet, dass** in dem zweiten Betriebszustand Frischluft stromabwärts der Turbine (32) des Abgasturboladers (16) und stromaufwärts des SCR-Katalysators (38) in die Abgasanlage (30) eingeblasen wird.

3. Verfahren nach Anspruch 1 oder 2, **dadurch gekennzeichnet, dass** eine Abgastemperatur (T_{EG}) des Verbrennungsmotors (10) ermittelt oder berechnet wird und nur dann Frischluft in die Abgasanlage (30) eingeblasen wird, wenn die Abgastemperatur (T_{EG}) eine Schwellentemperatur (Tₛ) übersteigt.

4. Verfahren nach Anspruch 3, **dadurch gekennzeichnet, dass** die Schwellentemperatur (Tₛ) oberhalb von 600°C liegt.

5. Verfahren nach einem der Ansprüche 1 bis 4, **dadurch gekennzeichnet, dass** ein Lastzustand des Verbrennungsmotors (10) ermittelt wird und nur dann Frischluft in die Abgasanlage (30) eingeblasen wird, wenn der Lastzustand einen Schwellenwert übersteigt.

6. Verbrennungsmotor (10) für ein Kraftfahrzeug, dessen Einlass (12) mit einem Ansaugtrakt (20) und dessen Auslass (14) mit einer Abgasanlage (30) verbunden ist, wobei der Verbrennungsmotor (10) mittels eines Abgasturboladers (16) mit einem im Ansaugtrakt (20) angeordneten Verdichter (22) und einer in der Abgasanlage (30) angeordneten Turbine (32) aufgeladen ist, und wobei ein zweiter Verdichter (24) vorgesehen ist, welcher über eine erste Leitung (26) mit dem Ansaugtrakt (20) und über eine zweite Leitung (34) mit der Abgasanlage (30) verbunden ist, **dadurch gekennzeichnet, dass** ein Steuergerät (50) vorgesehen ist, welches ein Verfahren nach einem der Ansprüche 1 bis 5 ausführt, wenn ein maschinenlesbarer Programmcode durch das Steuergerät (50) ausgeführt wird.

7. Verbrennungsmotor (10) nach Anspruch 6, **dadurch gekennzeichnet, dass** an dem zweiten Verdichter (24) oder an einer Verzweigungsstelle (56) der ersten Leitung (26) und der zweiten Leitung (24) ein Ventil (52) vorgesehen ist, mit welchem ein Frischluftstrom zwischen der ersten Leitung (26) und der zweiten Leitung (34) umschaltbar oder aufteilbar ist.

8. Verbrennungsmotor (10) nach Anspruch 6 oder 7, **dadurch gekennzeichnet, dass** der zweite Verdichter (24) als elektrisch angetriebener Verdichter ausgebildet ist.

9. Verbrennungsmotor (10) nach einem der Ansprüche 6 bis 8, **dadurch gekennzeichnet, dass** der zweite Verdichter (24) in einer Bypassleitung (42) angeordnet ist, welche parallel zu einer Ansaugleitung (48) des Ansaugtrakts (20) angeordnet ist.

10. Verbrennungsmotor (10) nach einem der Ansprüche 6 bis 9, **dadurch gekennzeichnet, dass** in der Abgasanlage (30) stromabwärts der Turbine (32) und stromaufwärts eines SCR-Katalysators (38) ein Oxidationskatalysator (36) oder ein NOx-Speicherkatalysator (54) angeordnet ist.

## Claims

1. Method for operating an internal combustion engine (10), the inlet (12) of which is connected to an intake tract (20) and the outlet (14) of which is connected to an exhaust system (30), wherein the internal combustion engine (10) is supercharged by means of an exhaust gas turbocharger (16) with a compressor (22) arranged in the intake tract (20) which is driven by a turbine (32) arranged in the exhaust system (30), and wherein a second compressor (24) is provided which is connected to the intake tract (20) via a first line (26) and is connected to the exhaust system (30) via a second line (34), **characterized in that**, in a first operating state of the internal combustion engine (10), the second compressor (24) is used to compress the fresh air supplied to the internal combustion engine (10) in addition to the compressor (22) of the exhaust gas turbocharger (16) and, in a second operating state, the second compressor (24) introduces fresh air into the exhaust system (30) in order to lower the exhaust gas temperature (T_{EG}) of an exhaust gas stream of the internal combustion engine (10) before it enters an SCR catalytic converter (38).

2. Method according to claim 1, **characterized in that**, in the second operating state, fresh air is blown into the exhaust system (30) downstream of the turbine (32) of the exhaust gas turbocharger (16) and upstream of the SCR catalytic converter (38).

3. Method according to claim 1 or 2, **characterized in that** an exhaust gas temperature (T_{EG}) of the internal combustion engine (10) is determined or calculated, and fresh air is only blown into the exhaust system (30) if the exhaust gas temperature (T_{EG}) exceeds a threshold temperature (Tₛ).

4. Method according to claim 3, **characterized in that** the threshold temperature (Tₛ) is above 600°C.

5. Method according to one of the claims 1 to 4, **characterized in that** a load state of the internal combustion engine (10) is determined, and fresh air is only blown into the exhaust system (30) if the load state exceeds a threshold value.

6. Internal combustion engine (10) for a motor vehicle, the inlet (12) of which is connected to an intake tract (20) and the outlet (14) of which is connected to an exhaust system (30), wherein the internal combustion engine (10) is supercharged by means of an exhaust gas turbocharger (16) with a compressor (22) arranged in the intake tract (20) and a turbine (32) arranged in the exhaust system (30), and wherein a second compressor (24) is provided which is connected to the intake tract (20) via a first line (26) and is connected to the exhaust system (30) via a second line (34), **characterized in that** a control unit (50) is provided which executes a method according to one of the claims 1 to 5 if a machine-readable program code is executed by the control unit (50).

7. Internal combustion engine (10) according to claim 6, **characterized in that** a valve (52) is provided at the second compressor (24) or at a branching point (56) of the first line (26) and the second line (24), by means of which a fresh air flow can be switched or split between the first line (26) and the second line (34).

8. Internal combustion engine (10) according to claim 6 or 7, **characterized in that** the second compressor (24) is formed as an electrically driven compressor.

9. Internal combustion engine (10) according to one of the claims 6 to 8, **characterized in that** the second compressor (24) is arranged in a bypass line (42) which is arranged in parallel with an intake line (48) of the intake tract (20).

10. Internal combustion engine (10) according to one of the claims 6 to 9, **characterized in that** an oxidation catalyst (36) or a NOx storage catalyst (54) is arranged in the exhaust system (30) downstream of the turbine (32) and upstream of an SCR catalyst (38).

## Revendications

1. Procédé de fonctionnement d'un moteur à combustion interne (10), dont l'entrée (12) est raccordée à un système d'aspiration (20) et dont la sortie (14) est raccordée à un système de gaz d'échappement (30), dans lequel le moteur à combustion interne (10) est chargé au moyen d'un turbocompresseur à gaz d'échappement (16) comprenant un compresseur (22) disposé dans le système d'aspiration (20), lequel est entraîné par une turbine (32) disposée dans le système de gaz d'échappement (30), et dans lequel un deuxième compresseur (24) est prévu, lequel est raccordé à travers une première conduite (26) au système d'aspiration (20) et à travers une deuxième conduite (34) au système de gaz d'échappement (30), **caractérisé en ce que**, dans un premier état de fonctionnement du moteur à combustion interne (10), le deuxième compresseur (24) est utilisé pour comprimer, en plus du compresseur (22) du turbocompresseur à gaz d'échappement (16), l'air frais amené au moteur à combustion interne (10) et, dans un deuxième état de fonctionnement, le deuxième compresseur (24) introduit de l'air frais dans le système de gaz d'échappement (30), afin d'abaisser la température de gaz d'échappement (T_{EG}) d'un courant de gaz d'échappement du moteur à combustion interne (10) avant l'entrée dans un catalyseur SCR (38).

2. Procédé selon la revendication 1, **caractérisé en ce que**, dans le deuxième état de fonctionnement, de l'air frais est soufflé dans le système de gaz d'échappement (30) en aval de la turbine (32) du turbocompresseur à gaz d'échappement (16) et en amont du catalyseur SCR (38).

3. Procédé selon la revendication 1 ou 2, **caractérisé en ce qu'**une température de gaz d'échappement (T_{EG}) du moteur à combustion interne (10) est déterminée ou calculée et de l'air frais est soufflé dans le système de gaz d'échappement (30) uniquement lorsque la température de gaz d'échappement (T_{EG}) dépasse une température seuil (Tₛ).

4. Procédé selon la revendication 3, **caractérisé en ce que** la température seuil (Tₛ) est supérieure à 600 °C.

5. Procédé selon l'une quelconque des revendications 1 à 4, **caractérisé en ce qu'**un état de charge du moteur à combustion interne (10) est déterminé et de l'air frais est soufflé dans le système de gaz d'échappement (30) uniquement lorsque l'état de charge dépasse une valeur seuil.

6. Moteur à combustion interne (10) pour un véhicule automobile, dont l'entrée (12) est raccordée à un système d'aspiration (20) et dont la sortie (14) est raccordée à un système de gaz d'échappement (30), dans lequel le moteur à combustion interne (10) est chargé au moyen d'un turbocompresseur à gaz d'échappement (16) comprenant un compresseur (22) disposé dans le système d'aspiration (20) et une turbine (32) disposée dans le système de gaz d'échappement (30), et dans lequel un deuxième compresseur (24) est prévu, lequel est raccordé à travers une première conduite (26) au système d'aspiration (20) et à travers une deuxième conduite (34) au système de gaz d'échappement (30), **caractérisé en ce qu'**un appareil de commande (50) est prévu, lequel exécuté un procédé selon l'une quelconque des revendications 1 à 5, lorsqu'un code de programme lisible par machine est exécuté par l'appareil de commande (50).

7. Moteur à combustion interne (10) selon la revendication 6, **caractérisé en ce qu'**au niveau du deuxième compresseur (24) ou au niveau d'un point de ramification (56) de la première conduite (26) et de la deuxième conduite (24), une soupape (52) est prévue, avec laquelle un courant d'air frais peut être commuté ou divisé entre la première conduite (26) et la deuxième conduite (34).

8. Moteur à combustion interne (10) selon la revendication 6 ou 7, **caractérisé en ce que** le deuxième compresseur (24) est conçu comme un compresseur entraîné électriquement.

9. Moteur à combustion interne (10) selon l'une quelconque des revendications 6 à 8, **caractérisé en ce que** le deuxième compresseur (24) est disposé dans une conduite de dérivation (42), laquelle est disposée parallèle à une conduite d'aspiration (48) du système d'aspiration (20).

10. Moteur à combustion interne (10) selon l'une quelconque des revendications 6 à 9, **caractérisé en ce que**, dans le système de gaz d'échappement (30), un catalyseur d'oxydation (36) ou un catalyseur accumulateur de NOx (54) est disposé en aval de la turbine (32) et en amont d'un catalyseur SCR (38).
